Europäisches Patentamt

European Patent Office

Office européen des brevets

(19)

(11) Publication number: **0 140 034**

**B1**

(12)

# EUROPEAN PATENT SPECIFICATION

(45) Date of publication of patent specification: **23.11.89**

(51) Int. Cl.⁴: **H 02 B 13/02**

(21) Application number: **84110457.3**

(22) Date of filing: **03.09.84**

(54) Adsorption device for gas insulated electric apparatus.

(30) Priority: **16.09.83 JP 169243/83**

(43) Date of publication of application:
**08.05.85 Bulletin 85/19**

(45) Publication of the grant of the patent:
**23.11.89 Bulletin 89/47**

(84) Designated Contracting States:
**DE FR NL**

(56) References cited:
**CH-A- 252 891**
**DE-B-1 191 476**
**FR-A-1 553 803**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Takagi, Kunihiko**
**3-32-7, Hijirigaoka**
**Tama-Shi Tokyo-To (JP)**
Inventor: **Matsuzawa, Kikuo**
**2-33-16, Kita**
**Kunitachi-Shi Tokyo-To (JP)**

(74) Representative: **Münzhuber, Robert, Dipl.-Phys.**
**Patentanwalt Rumfordstrasse 10**
**D-8000 München 5 (DE)**

EP 0 140 034 B1

Courier Press, Leamington Spa, England.

## Description

### Background of the invention

This invention relates to an adsorption device for a gas insulated electric apparatus having a gas-tight housing filled with a halogen containing gas for eliminating decomposed portions of said gas and moisture, said adsorption device comprising an enclosed type casing for storing an adsorbent, inlet and outlet provided for the casing to permit circulation of said halogen containing gas through the casing, valve means provided at said inlet and outlet for permitting and interrupting the circulation of said gas through said casing. Such an adsorption device is disclosed in FR—A—1 553 803.

Recently, halogen containing gases such as sulfur hexafluoride gas ($SF_6$) are widely used in gas insulated electric apparatus, such as circuit interrupter and enclosed type switchboards for improving insulation and reducing sizes. However, the gases of the afore-mentioned type entail the following disadvantages.

(1) The gas easily reacts with moisture remaining in the apparatus or intruded therein from outside through a mechanical connecting portion to thereby produce chemical compounds that deteriorate the insulation of metal parts of the apparatus.

(2) By the arcs of arc discharge, the gas is easily decomposed into sulfur difluoride ($SF_2$) gas and sulfur tetrafluoride ($SF_4$) gas which deteriorate insulation and metal parts of the apparatus.

In order to eliminate such drawbacks, an adsorbent such as activated alumina or synthetic zeolite has been utilized for the apparatus in a state encased in one or more casings and placed in suitable positions of the apparatus. Such arrangement as described above, however, tends to cause the following difficulties.

(1) It is difficult to decide the amount of the adsorbent to be used because the required amount thereof is varied depending on the amount of moisture contained in the apparatus, intensity and frequency of the occurrence of arc-discharge, and time interval between periodical inspections carried out on the apparatus. Furthermore, where the apparatus is an enclosed switchboard, unpredictable troubles in the relevant power system must be considered.

(2) Each time when the adsorbent placed in the apparatus is replaced, electric power supplied thereto must be interrupted.

(3) When a large amount of adsorbent is beforehand placed in the apparatus so that the operation stop other than the periodical inspection time is made unnecessary, the size of the casing or casings in which the adsorbent is stored becomes large, thus increasing the space required for providing the adsorbent containing device in the apparatus.

The adsorption device of the mentioned FR—A—1 553 803 and an adsorption device disclosed in DE—B—1 191 476 have the following disadvantages:

(a) Projecting portion are projecting outside of the housing, and therefore the arrangement and the construction of the housing are rather complex and of high costs.

(b) The circulation of the mixed gas and, therefore, the adsorption effect are not satisfying.

(c) the contact area of the adsorbent is small, and a sufficient adsorption can not be realized by a small amount of adsorbent.

### Summary of the invention

An object of this invention is to provide an adsorption device for a gas-insulated electric apparatus wherein the above described difficulties in the conventional application of the adsorbent can be substantially eliminated.

A more specific object of this invention is to provide an adsorption device for a gas-insulated electric apparatus wherein the adsorbent for removing decomposed gas and the like can be replaced without requiring interruption of electric power, and the quantity of the adsorbent and hence the space required for the installation of the apparatus can be economized.

These and other objects of the present invention can be achieved by an adsorption device provided for a gas-insulated electric apparatus having a gas-tight housing with a halogen containing gas for eliminating decomposed portions of said gas and moisture, said adsorption device comprising an enclosed type casing for storing an adsorbent, inlet and outlet provided for the casing to permit circulation of said halogen containing gas through the casing, valve means provided at said inlet and outlet for permitting and interrupting the circulation of said gas through said casing, characterized in that said casing is provided internally of said housing so that said casing is secured to one wall of said housing internally, an access port is formed through said casing and said housing for allowing replacement of the adsorbent therethrough, and a cover plate of a size sufficient to cover said access port is detachably secured to the outer surface of the housing in a gas tight manner.

According to another feature of the invention, the adsorbing device secured to the outer wall of the apparatus is so constructed that an adsorbing agent encased therein can be replaced without interrupting the power supply to the apparatus.

According to still another feature of the invention, the adsorption device for the electric apparatus further comprises a self-contained gas circulating device which forcibly circulates the halogen containing gas through the adsorbing device.

### Brief description of the drawing

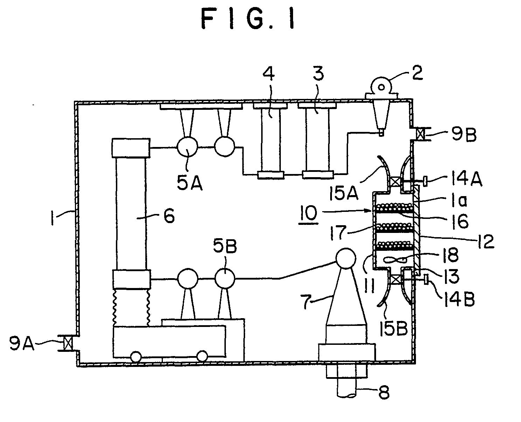

In the accompanying drawing, Fig. 1 is an elevational view in section showing a gas insulated electric apparatus in the form of an enclosed type switchboard including a gas absorption device, which constitutes a preferred embodiment of the invention.

Description of the preferred embodiment

The invention will now be described in detail with reference to Fig. 1 showing a case wherein the gas insulated electric apparatus is in the form of an enclosed type switchboard.

As shown in Fig. 1, the enclosed type switchboard comprises a housing 1 having a top wall through which a connector 2 is extended. The outer end of the connector 2 is connected to a power source bus, while the internal end of the connector 2 is connected through an arrester 3, a potential transformer 4, a disconnector 5A, to the upper terminal of a circuit breaker 6. The lower terminal of the circuit breaker 6 is connected through another disconnector 5B and a cable head 7 to a load-side cable 8. The internal space within the housing 1 is filled with a halogen containing gas such as sulfur hexafluoride $SF_6$, which is introduced into the housing 1 through a valve 9A while air therein is exhausted outside through another valve 9B. When the density of the halogen containing gas becomes a predetermined value, the values 9A and 9B are closed.

According to the present invention, an adsorption device 10 is provided internally along a side wall of the housing 1. The device 10 comprises a box-like casing 11, one side wall of which is substantially removed. The casing 11 is secured, for instance, by welding to the internal surface of one side wall of the housing 1 formed with an access port 1a. A cover plate 12 of a size sufficient to cover the access port 1a is detachably secured to the outer surface portion of the housing 1 surrounding the port 1a by means of, for instance, bolts and nuts, with a gasket 13 interposed between the cover plate 12 and the surrounding portion of the housing 1.

Valves 14A and 14B are provided for inlet and outlet portions of the casing 11 to permit or interrupt the circulation of the gas mixed with moisture and else through the interior of the casing 11. Hoods 15A and 15B are further provided upwardly and downwardly of the valves 14A and 14B, respectively, for guiding the flow of the mixed gas through the casing 11.

Internally of the casing 11, there are provided a number of shelves 16, on which adsorbent 17 such as activated alumina or synthetic zeolite is stored. An axial flow fan 18 is further provided below the shelves 16 for forcing the fixed gas to flow downward out of the casing 11 for facilitating the gas circulation therein.

In the enclosed type switchboard constructed as described above, the halogen containing gas containing moisture and decomposed gases is warmed by heat generated in the switchboard to cause the mixed gas to flow, by thermal convection through the casing 11 downwardly. The fan 18 provided in the adsorption device 10 accelerates the circulation of the gas so as to improve the adsorption of the decomposed gases and moisture by the adsorption device 10.

When it is required to replace the adsorbent, the cover plate 12 is removed out of the side wall of the housing 1 of the switchboard while the valves 14A and 14B are closed, and the old adsorbent is replaced with new adsorbent through the access port of the casing 11 without interrupting electric power in the apparatus.

Whenever the operational life of the adsorbent is not sure after frequent unpredictable operations of the circuit breaker 6, a part of the gas may be sampled through the valve 9B or else for detecting the degree of contamination or decomposition of the gas. Furthermore, the fan 18 provided in the adsorption device 10 may be operated to improve the decomposed gas removing capability of the device 10 in a case where a large amount of the decomposed gas is created by frequent operations of the circuit breaker 6.

Since the gas insulated electric apparatus such as enclosed type switchboard is constructed as described above, the following advantages would be expected.

(1) The adsorbent can be replaced without opening the housing, so that the electric apparatus can be operated continuously except the periodical inspection periods.

(2) Because of the sample replacement of the adsorbent, there is no necessity of storing a large amount of adsorbent in the casing, thus enabling to reduce the floor area required for the apparatus.

(3) Since the adsorbent can be replaced upon detection of a predetermined density of the decomposed gases, a high insulation reliability of the apparatus can be assured.

In the foregoing embodiments shown in Fig. 1, the vertical type gas adsorption device is disposed on the side wall of the housing of an gas insulated electric apparatus, but the adsorption device of this invention may be provided for the upper or lower wall thereof by the manner similar to that described with reference to the embodiments shown in Fig. 1. Moreover, a fan for facilitating the circulation of gas in the adsorption device may also be located at the upper portion, i.e. upstream side, of the adsorption device.

Claims

1. An adsorption device (10) provided for a gas-insulated electric apparatus having a gas-tight housing (1) filled with a halogen containing gas for eliminating decomposed portions of said gas and moisture, said adsorption device (10) comprising an enclosed type casing (11) for storing an adsorbent (17), inlet and outlet provided for the casing (11) to permit circulation of said halogen containing gas through the casing (11), valve means (14A, 14B) provided at said inlet and outlet for permitting and interrupting the circulation of said gas through said casing (11), characterized in that said casing (11) is provided internally of said housing (1) so that said casing (11) is secured to one wall of said housing (1) internally, an access portion (1a) is formed through said casing (11) and said housing (1) for allowing replacement of the adsorbent (17) therethrough, and a cover plate (12) of a size sufficient to cover said access port (1a) is detachably secured to the other surface of the housing (1) in a gas tight manner.

2. An adsorption device (10) as set forth in claim 1 which further comprises a fan (18) provided near the outlet of said casing (11) for enhancing the circulation of said halogen containing gas.

3. An adsorption device (10) as set forth in claim 1 wherein said casing (11) is secured to one side wall of said housing so that the casing (11) is disposed vertically, and said casing (11) includes a number of shelves (16) for storing the adsorbent (17) on said shelves (16).

4. An adsorption device as set forth in claim 1 wherein said halogen containing gas is sulfur hexafluoride $SF_6$.

5. An adsorption device as set forth in claim 1 wherein said adsorbent includes activated alumina.

6. An adsorption device as set forth in claim 1 wherein said adsorbent includes synthetic zeolite.

7. An adsorption device as set forth in claim 1 wherein said gas-insulated electric apparatus is an enclosed type switchboard.

8. An adsorption device as set forth in claim 1 wherein hoods (15A) and (15B) are further provided upwardly and downwardly of said valve portions (14A, 14B) for guiding the flow of the mixed gas through said casing (11).

## Patentansprüche

1. Adsorptionsvorrichtung (10) für eine gasisolierte elektrische Vorrichtung mit einem gasdichten Gehäuse (1), das mit einem halogenhaltigen Gas zwecks Beseitigung von zersetzten Teilen dieses Gases und von Feuchtigkeit gefüllt ist, wobei die Adsorptionsvorrichtung (10) einen geschlossenen Behälter (11) zum Lagern eines Adsorbents (17), einen Einlaß und einen Auslaß für den Behälter (11) zwecks Ermöglichung einer Zirkulation des halogenhaltigen Gases durch den Behälter (11) und Ventile (14A, 14B) am Einlaß und am Auslaß zwecks Ermöglichung und Unterbrechung der Zirkulation des Gases durch den Behälter (11) aufweist, dadurch gekennzeichnet, daß der Behälter (11) derart innerhalb des Gehäuses (1) angeordnet ist, daß der Behälter (11) innen an einer Wand des Gehäuses (1) befestigt ist, daß eine Zugangsöffnung (1a) durch den Behälter (11) und das Gehäuse (1) hindurch zwecks Ermöglichung eines Ersatzes des Adsorbents (17) vorgesehen ist, und daß an der Außenfläche des Gehäuses (1) eine Abdeckplatte (12) lösbar befestigt ist, deren Größe genügt, die Zugangsöffnung (1a) gasdicht abzudecken.

2. Adsorptionsvorrichtung (10) nach Anspruch 1, welche zusätzlich ein Gebläse (18) aufweist, welches hinter dem Auslaß des Behälters vorgesehen ist und die Zirkulation des halogenhaltigen Gases unterstützt.

3. Adsorptionsvorrichtung (10) nach Anspruch 1, bei welcher des Behälter (11) an einer Seitenwand des Gehäuses befestigt ist, so daß der Behälter (11) vertikal angeordnet ist, und wobei der Behälter (11) eine Anzahl von Schalen (16) zur Lagerung des Adsorbents (17) auf den Schalen (16) aufweist.

4. Adsorptionsvorrichtung nach Anspruch 1, bei welcher das halogenhaltige Gas Schwefelhexafluorid $SF_6$ ist.

5. Adsorptionsvorrichtung nach Anspruch 1, bei welcher das Adsorbent aktivierte Tonerde enthält.

6. Adsorptionsvorrichtung nach Anspruch 1, bei welcher das Adsorbent synthetischen Zeolit enthält.

7. Adsorptionsvorrichtung nach Anspruch 1, bei welcher die gasisolierte elektrische Vorrichtung eine gekapselte Schalttafel ist.

8. Adsorptionsvorrichtung nach Anspruch 1, bei welcher oberhalb und unterhalb der Ventile (14A, 14B) zwecks Führung der Strömung des Mischgases durch den Behälter (11) Abzugshauben (15A und 15B) vorgesehen sind.

## Revendications

1. Un dispositif d'adsorption (10) conçu pour un appareil électrique isolé par gaz, comportant un carter (1) étanche au gaz, pourvu d'un gaz contenant un halogène afin d'éliminer des parties décomposées dudit gaz et de l'humidité, le dispositif d'adsorption (10) comprenant un boîtier (11) de type fermé pour stocker une matière adsorbante (17), une entrée et une sortie prévues pour le boîtier (11) afin der permettre une circulation dudit gaz contenant un halogène au travers du boîtier (11), des moyens d'arrêt (14A, 14B) prévus à ladite entrée et à ladite sortie pour permettre et interrompre la circulation dudit gaz au travers dudit boîtier (11), caractérisé en ce que ledit boîtier (11) est disposé à l'intérieur dudit carter (1) de telle sorte que ledit boîtier (11) soit fixé sur une paroi dudit carter (1) côté intérieur, une ouverture d'accès (1a) est formée au travers dudit boîtier (11) et dudit carter (1) pour permettre un remplacement de la matière adsorbante (17) au travers de celle-ci, et une plaque de recouvrement (12) d'un dimensionnement suffisant pour recouvrir ladite ouverture d'accès (1a) est fixée de façon séparable sur la surface extérieure du carter (1) d'une manière étanche au gaz.

2. Un dispositif d'adsorption (10) tel que défini dans la revendication 1, qui comprend en outre un ventilateur (18) placé à proximité de la sortie dudit boîtier (11) pour améliorer la circulation dudit gaz contenant un halogène.

3. Un dispositif d'adsorption (10) tel que défini dans la revendication 1, dans lequel ledit boîtier (11) est fixé sur une paroi latérale dudit carter de telle sorte que le boîtier (11) soit disposé verticalement, et ledit boîtier (11) comporte un certain nombre de plateaux (16) pour stocker la matière adsorbante (17) sur lesdits plateaux (16).

4. Un dispositif d'adsorption tel que défini dans la revendication 1, dans lequel ledit gaz contenant un halogène est de l'hexafluorure de soufre $SF_6$.

5. Un dispositif d'adsorption tel que défini dans la revendication 1, dans lequel ladite matière adsorbante contient de l'alumine activée.

6. Un dispositif d'adsorption tel que défini dans la revendication 1, dans lequel ladite matière adsorbante contient de la zéolite synthétique.

7. Un dispositif d'adsorption tel que défini dans la revendication 1, dans lequel ledit appareil électrique isolé par gaz est un coffret de commande de type fermé.

8. Un dispositif d'adsorption tel que défini dans la revendication 1, dans lequel des hottes (15A et 15B) sont en outre disposées vers le haut et vers le bas desdites valves (14A, 14B) pour guider l'écoulement de mélange gazeux au travers dudit boîtier.

# F I G. 1